# EUROPEAN PATENT APPLICATION

(11) **EP 3 989 097 A1**
(43) Date of publication of application: **27.04.2022**
(21) Application number: 20203718.0
(22) Date of filing: 23.10.2020
(51) Int. Cl.: G06F 30/20, G06F 30/15, G06F 30/23, G06F 113/14

(54) **METHOD AND SYSTEM FOR OPTIMISING DESIGN OF A FIRE SUPPRESSANT SYSTEM**

(71) Applicant: United Technologies Research Centre Ireland, Limited, T23 XN53 Cork City (IE)
(72) Inventor: CAO, Changmin, Cork T12 CX82 (IE); JARVIS, Padraig, Cork T12 HK4W (IE); CHATTAWAY, Adam, Windsor, Berkshire, SL4 2QG (GB); RIDOUANE, El Hassan, Cork T23 A5W0 (IE); WAHBI, Mohamed, Cork T45 XE00 (IE)
(74) Representative: Dehns

(57) **Abstract**

A method and system for optimizing design of a fire suppressant system for a space, the method comprising: receiving (100) system requirements defining constraints of the system; defining (200) system parameters including required coverage of a fire suppressing agent and required flow rate of the agent based on the system requirements; searching a database of system components and selecting components able to satisfy the system requirements and provide the required coverage and flow rate; optimally combining (300) the selected components into a system layout; representing the system layout as a three dimensional, 3D, model; performing (500) three dimensional computational fluid dynamic, CFD, modelling on the 3D model to evaluate performance of the system layout; and determining (600), based on the CFD modelling, whether the system layout is an optimal design for the space.

## Description

### TECHNICAL FIELD

The present disclosure is concerned with methods and systems for allowing optimal design of a fire suppressant system.

### BACKGROUND

Fire suppressant systems are used to deliver a fire suppressant or extinguishing agent in a confined space. Such systems include an arrangement of one or more sources e.g. cylinders, containing fire suppressing agent, pipes, pipe connectors and nozzles to appropriately distribute the fire suppressing agent throughout the space to extinguish or suppress a fire in the space.

Many fire suppressant agents are known. The appropriate agent will depend on the nature of the space and the expected type of fire to be extinguished. Examples include halon-based agents, foams, inert gas, trifluoromethyl iodide (CF3I), hydrofluorocarbons (HFCs), fluoroketones (FKs), water mist. Due to on-going concerns of stratospheric ozone depletion, the use of halon-based agents has largely been phased out under the Montreal Protocol. One exception to this phase-out is on board aircraft. Nevertheless, it is desired, and soon will be required, to use non-halon agents for all new aircraft, and in the future to retrofit halon-based agent with non-ozone depleting alternatives.

The desired layout of the pipes and nozzles, the agent(s) used, quantities of agent and flow rate will all be dependent on characteristics of the space or environment where the system is installed. When designing such systems, designers need to take various factors into account to ensure an optimal system design for the space and environment concerned. Fire suppressant systems typically also have to satisfy safety and regulatory standards and requirements. For example, the placement of the nozzles and the flow rate of the agent should ensure adequate coverage of the space and should not give rise to any overpressure concerns. Other factors, such as the overall size and weight of the system may also be important in some environments such as for fire suppressant systems in aircraft or other vehicles.

Conventionally, design of fire suppressant systems has involved manually drawing out the layout of the pipes, cylinders and nozzles based on expert knowledge and performing iterations and testing until a preferred design is identified. The designer needs to consider the resulting dispersion of the agent in the given space based on e.g. nozzle design and nozzle placement. Because of the large number of possible components, agents and other variations that can be considered for any fire suppression system, this is a time intensive process and depends on the expertise of the designer. Even where computer modelling is used, the large number of parameter variations makes modelling and optimal design impractical in terms of computational requirements and such processes are, again, very time intensive.

There is, therefore, a need for a method and system for allowing such fire suppressant systems to be designed in an efficient and optimal manner.

### SUMMARY

Provided herein is a method of optimizing design of a fire suppressant system for a space, the method comprising:
receiving system requirements defining constraints of the system;
defining system parameters including required coverage of a fire suppressing agent and required flow rate of the agent based on the system requirements;
searching a database of system components and selecting components able to satisfy the system requirements and provide the required coverage and flow rate;
combining the selected components into a system layout;
searching optimized system layouts;
representing the system layout as a three dimensional, 3D, model;
performing three dimensional computational fluid dynamic, CFD, modelling on the 3D model to evaluate performance of the system layout;
determining, based on the CFD modelling, whether the system layout is an optimal design for the space.

In addition, a one dimensional hydraulic flow evaluation may be performed on the system layout, prior to performing the CFD modelling, and a layout can be excluded from further evaluation if it is determined from the flow evaluation that system requirements are not met. The hydraulic flow evaluation may involve allocating a score to a layout depending on performance and ranking the layout according to score.

In some examples, if it is determined, based on the CFD modelling that the system layout is not an optimal design, the method may return to the step of defining system parameters.

The step of combining the selected components into a selected layout may comprise combining the selected components into a plurality of possible layouts and the method may further comprise:
representing each system layout as a three dimensional, 3D, model;
performing three dimensional computational fluid dynamic, CFD, modelling on each 3D model to evaluate performance of the respective system layout;
determining, based on the CFD modelling, whether each system layout is a feasible design for the space; and
selecting an optimal layout from the layouts determined to be feasible.

The step of combining the selected components into a system layout may comprise using a constraint programming (CP) model using discrete integer variables, graph variables and global reasoning constraints.

CFD modelling may be performed on each 3D model for a plurality of different scenarios for the space. The different scenarios may be defined by features relating to leakage conditions and/or ambient conditions.

In the examples, the pace is the interior of an aircraft, but the method may be equally applied to other spaces. In the case of an aircraft, the different scenarios may be defined by features relating to different flight phases of the aircraft.

According to another aspect, there is provided a system for optimizing design of a fire suppressant system for a space, the system comprising:
means for receiving system requirements defining constraints of the system;
a physical based calculator module defining system parameters including required coverage of a fire suppressing agent and required flow rate of the agent based on the system requirements and for searching a database of system components and selecting components able to satisfy the system requirements and provide the required coverage and flow rate;
an optimization solver module for optimally combining the selected components into a system layout and representing the system layout as a three dimensional, 3D, model;
a CFD modelling module for performing three dimensional computational fluid dynamic, CFD, modelling on the 3D model to evaluate performance of the system layout; and
means for determining, based on the CFD modelling, whether the system layout is an optimal design for the space.

The system may also comprise a one dimensional hydraulic calculator module for receiving the system layout and evaluating flow of the agent in the selected layout and forwarding only layouts considered as feasible layouts, based on the evaluated flow, to the CFD modelling module.

The components may include agent dispersing nozzles and pipes for connecting the nozzles and/or sources of fire suppressing agent.

The system requirements may include size, weight, volume, pressure, temperature and/or cost requirements.

### BRIEF DESCRIPTION OF THE DRAWINGS

Figure 1 shows a tool chain for designing an optimal fire suppressant system in accordance with this disclosure.
Figure 2 is a flow chart showing a method for designing an optimal fire suppressant system in accordance with this disclosure.

### DETAILED DESCRIPTION

Embodiments will now be described by way of example only and with reference to the drawings.

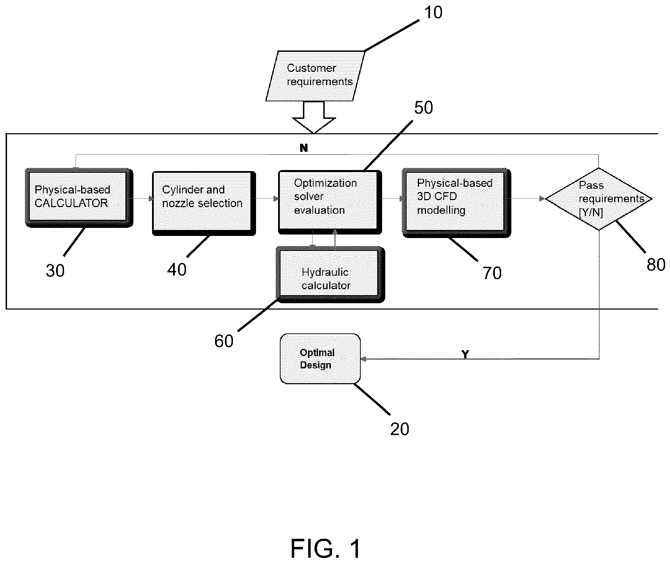

Referring first to Fig. 1, the tool chain for the optimal design process comprises a number of modules that perform various functions all based on input 10 defining the system requirements to generate an optimal design 20. In the example shown, and as will be described further below, the modules include a physical based calculator 30, from which cylinders and nozzles are selected 40, an optimization solver 50, a hydraulic calculator 60 and a 3D modelling module 70. If it is determined, 80, that the generated design satisfies the system or customer requirements, the optimal design is selected for the fire suppressant system.

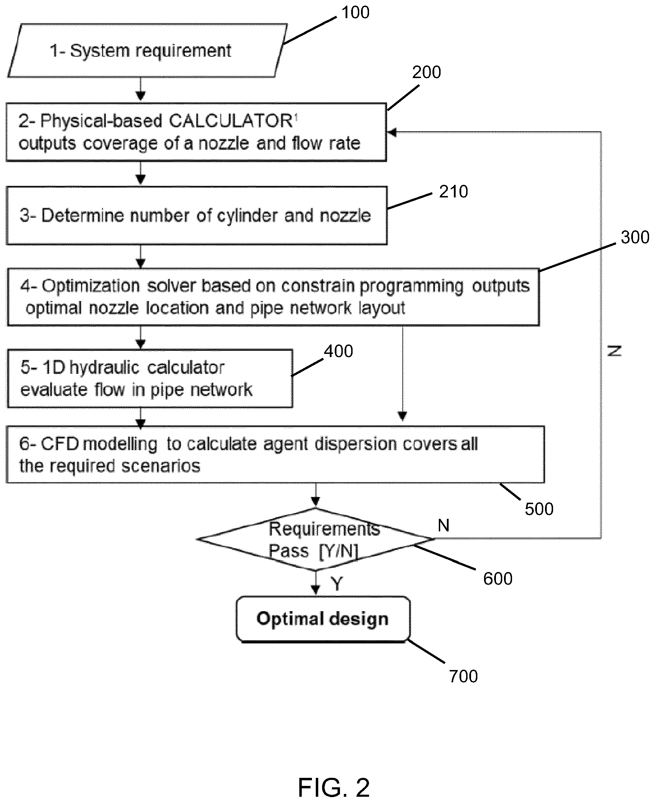

The operation of these modules is described further with reference to the flow chart of Fig. 2.

First, in order to generate an optimal design, the requirements of the system must been known. These will include various factors such as, by way of example only, requirements necessary to comply with safety and other regulations, size and weight constraints, parameters of the space in which the system is installed e.g. layout, dimensions, temperature, pressure, materials and or fixtures, fittings and furniture in the space, required agent or oxygen concentration , permitted temperature and/or pressure limits, fire suppressant agents to be used, cost constraints and other customer requirements. The system requirements can be input, 100, in various ways e.g. they can be manually entered by a user through a variety of interfaces such as a GUI, a keyboard, a mouse etc. Alternatively, they can be automatically received from another system or computer e.g. via a wired or wireless communication interface. These are examples only and the system requirements can be input in any manner.

Based on the system requirement input 100, the system then uses a physical-based calculator 30, in step 200, to determine the required coverage of nozzles and required flow rates to meet the requirements (210). Based on the determined nozzle coverage and flow rates, fire suppressant agent cylinders or sources, and distribution nozzles are selected from a database of known components such as nozzles, pipes, valves, regulators etc. US 16/254,863 describes a physical-based calculator that could be used to perform this step.

Once the sources of suppressant agent and the nozzles have been selected, possible design layouts are generated, in step 300, by an optimization solver, that meet the system requirements and that provide the coverage and flow rate determined by the physical-based calculator in step 200. The optimization solver may generate one or more potential layouts. The generation of layouts in this step is preferably performed using a constraint programming (CP) model using discrete integer variables, graph variables and global reasoning constraints. Such a CP model is described in a cofiled EP application entitled 'CONSTRAINT PROGRAMMING METHODS FOR OPTIMAL DESIGN CONFIGURATIONS OF DISTRIBUTION SYSTEMS' (docket 128498EP01). The CP model represents combinatorial design-space of possible layouts in terms of discrete integer variables or mathematical objects defining the layouts, in terms of graph variables i.e. mathematical structures composed of nodes and vertices defining the layout and edges/arcs connecting the nodes and vertices, and in terms of global constraints. The integer variables represent e.g. number of nozzles, cylinders, pipes, connector/test, x-, y- and z-coordinates of the components etc. The graph variables are used to represent the 3D layout of the fire suppression system by representing the devices and the pipes linking them in the design space. The global constraints are set by some of the user requirements. These ensure that the solutions generated by the optimization solver will satisfy the requirements. An example of such a constraint might be that the positions of all of the devices in the design space are different. These constraints are necessary to efficiently filter unfeasible search space so that only feasible components and layouts are considered. It is, however, envisaged that other programs could be used to generate potential layouts that meet the calculated requirements or constraints.

More specifically, the optimization solver will algorithmically explore the combination of layouts/design-space to find feasible system layouts that satisfy the system requirements. The output of the optimization solver is a 3D representation of the layout.

The design-space can, for example, be encoded using discrete integer variables, graph variables and global constraints. Other mathematical models can be used to represent and then search layout solutions that satisfy the system requirements, in 3D space.

These two steps for generating promising potential layouts that meet the system requirements can be performed relatively quickly and with relatively low computational cost as with prior art design processes. Additionally, the optimization solver will comprehensively consider all possible configurations to select those that meet the requirements which is manually impossible task for a designer given the size of the design-space (i.e., the number of configurations to consider).

Once promising layouts that meet the constraints of the system/customer requirements have been generated, the performance of these layouts may be evaluated using a hydraulic calculator (step 400). This is a one-dimensional process to test the actual performance of the proposed design in terms of e.g. mass flow rate at each nozzle, pressure drop in pipes, operation of pressure regulators, pipe connectors etc. to identify if the flow and dispersion of the agent(s) does actually work as required and how effectively it meets the system requirements. At this stage, some designs may be excluded if, for example, they do not meet some system requirement constraints. Those layouts that are not excluded may be allocated a score depending on performance and may be ranked according to score.

In some embodiments, it can be assumed that all design layouts generated by the optimization solver satisfy the system requirements and the step of evaluation using the hydraulic calculator may be omitted. It is, however, preferred to use the hydraulic calculator to evaluate the selected optimized designs.

The above processes are quick selection processes to select design layouts that are considered promising optimal designs.

The designs layouts that have been generated by the optimization solver step and, where provided, confirmed by the hydraulic calculator, then undergo a more thorough evaluation to enable selection of an optimal design for implementation.

A physical-based three dimensional Computational Fluid Dynamic (CFD) modelling (step 500) is then used to calculate agent dispersion in the space. In the preferred embodiments, the CFD modelling is performed for different scenarios in the space, such as leakage rate, ambient conditions e.g. temperature, pressure, humidity. Where the space is an aircraft, the modelling can be performed for different flight phases of the aircraft.

3D CFD modelling is a three-dimensional, multi-species simulation used to monitor parameters such as agent concentration, pressure and temperature in the space. Any known modelling software can be used and adapted for the required CFD modelling.

If an optimal design layout is identified from the CFD modelling, that satisfies all system/customer requirements (step 600), an optimal design layout (20) is selected for implementation (step 700). If no optimal design layout is identified that satisfies all requirements (N at step 600), the system returns to step 200 where new coverage and flow rate parameters and components are selected in an iterative process. This is continued until an optimal layout meeting all system requirements is identified and is selected as the optimal design 20.

The selected optimal design can be provided as an output that enables the fire suppression system to be built and installed in the 3D-space. The output may be in the form of a description or image or e.g. the number and sizes of any cylinder/source of agent, size and location and type of nozzles as well as piping layout and connections between cylinders and nozzles.

The present methods and tool chains allow optimal design of fire suppression systems for confined spaces e.g. aircraft, designed taking into account all requirements and relevant factors of the space, by means of an automatic generation and evaluation methodology. This results in a significant reduction in expert designer effort and time by providing the designer with a methodology and tools to quickly and easily generate and analyze different design configurations. The designer is able to create multiple design scenarios and evaluate and analyze them with computationally efficient simulation models, thereby enabling the selection of the optimal solution.

The cost of development testing and certification is significantly reduced. The method and tool chain can be applied to a wide range of fire suppression system designs.

## Claims

1. A method of optimizing design of a fire suppressant system for a space, the method comprising:
receiving (100) system requirements defining constraints of the system;
defining (200) system parameters including required coverage of a fire suppressing agent and required flow rate of the agent based on the system requirements;
searching a database of system components and selecting components able to satisfy the system requirements and provide the required coverage and flow rate;
combining (300) the selected components into a system layout;
representing the system layout as a three dimensional, 3D, model;
performing (500) three dimensional computational fluid dynamic, CFD, modelling on the 3D model to evaluate performance of the system layout;
determining, (600) based on the CFD modelling, whether the system layout is an optimal design for the space.

2. The method of claim 1, further comprising performing (400) a one dimensional hydraulic flow evaluation on the system layout, prior to performing the CFD modelling, and excluding a layout from further evaluation if it is determined from the flow evaluation that system requirements are not met.

3. The method of claim 2, wherein the hydraulic flow evaluation involves allocating a score to a layout depending on performance and ranking the layout according to score

4. The method of any preceding claim, further comprising, if it is determined, based on the CFD modelling that the system layout is not an optimal design, returning to the step of defining system parameters.

5. The method of any preceding claim, wherein the step of combining the selected components into a selected layout comprises combining the selected components into a plurality of possible layouts and wherein the method further comprises:
representing each system layout as a three dimensional, 3D, model;
performing three dimensional computational fluid dynamic, CFD, modelling on each 3D model to evaluate performance of the respective system layout;
determining, based on the CFD modelling, whether each system layout is a feasible design for the space; and
selecting an optimal layout from the layouts determined to be feasible.

6. The method of any preceding claim, wherein the step of combining the selected components into a system layout comprises using a constraint programming (CP) model using discrete integer variables, graph variables and global reasoning constraints.

7. The method of any preceding claim wherein the step of performing CFD modelling comprises performing CFD modelling on each 3D model for a plurality of different scenarios for the space.

8. The method of claim 7, wherein the different scenarios are defined by features relating to leakage conditions and/or ambient conditions.

9. The method of any preceding claim wherein the space is the interior of an aircraft.

10. The method of claim 9 dependent on claims 7 or 8, wherein the different scenarios are defined by features relating to different flight phases of the aircraft.

11. A system for optimizing design of a fire suppressant system for a space, the system comprising:
means (10) for receiving system requirements defining constraints of the system;
a physical based calculator module (30) defining system parameters including required coverage of a fire suppressing agent and required flow rate of the agent based on the system requirements and for searching a database of system components and selecting components able to satisfy the system requirements and provide the required coverage and flow rate;
an optimization solver module (50) for optimally combining the selected components into a system layout and representing the system layout as a three dimensional, 3D, model;
a CFD modelling module (70) for performing three dimensional computational fluid dynamic, CFD, modelling on the 3D model to evaluate performance of the system layout; and
means (80) for determining, based on the CFD modelling, whether the system layout is an optimal design for the space.

12. A system as claimed in claim 11, further comprising a one dimensional hydraulic calculator module (60) for receiving the system layout and evaluating flow of the agent in the selected layout and forwarding only layouts considered as feasible layouts, based on the evaluated flow, to the CFD modelling module.

13. The method or system of any of the preceding claims, wherein the components include agent dispersing nozzles and pipes for connecting the nozzles.

14. The method or system of claim 13, wherein the components include sources of fire suppressing agent.

15. The method or system of any of the preceding claims, wherein the system requirements include size, weight, volume, pressure, temperature and/or cost requirements.
